(19) Europäisches Patentamt
European Patent Office
Office européen des brevets

(11) **EP 4 757 151 A1**

(12) **EUROPEAN PATENT APPLICATION**

(43) Date of publication:
**10.06.2026 Bulletin 2026/24**

(51) International Patent Classification (IPC):
*H02M 1/00* $^{(2006.01)}$       *H02M 3/158* $^{(2006.01)}$

(21) Application number: **25220215.5**

(22) Date of filing: **02.12.2025**

(52) Cooperative Patent Classification (CPC):
**H02M 3/158; H02M 1/0025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 US 202463728733 P**
**06.02.2025 US 202563754695 P**
**16.10.2025 US 202519359866**

(71) Applicant: **QORVO US, INC.**
**Greensboro, NC 27409 (US)**

(72) Inventors:
• **NGUYEN, Hung Viet**
**Hanoi City (VN)**
• **TRINH, Hue Khac**
**Hanoi City (VN)**

(74) Representative: **D Young & Co LLP**
**3 Noble Street**
**London EC2V 7BQ (GB)**

(54) **REGULATING OUTPUT VOLTAGE IN AN ADAPTIVE CONSTANT ON-TIME BOOST CONVERTER**

(57)     A regulated adaptive constant on-time (ACOT) boost converter is disclosed. Herein, the regulated ACOT boost converter includes a synchronous boost converter that can boost an input voltage to a higher output voltage in accordance with a duty cycle. The regulated ACOT boost converter also includes a well-known ACOT controller that determines the duty cycle with repeating cycles each consisting of a fixed on-time duration and a flexible off-time duration. Understandably, for the synchronous boost converter to operate efficiently, the input voltage needs to be lower than the output voltage. In this regard, in an embodiment, the regulated ACOT boost converter can further include a regulating circuit that can cause a dynamic adjustment to the duty cycle when the input voltage is approaching the output voltage. As a result, it is possible to keep the output voltage in regulation and prevent damage in the synchronous boost converter.

REGULATED ACOT BOOST CONVERTER 40

FIG. 3

**Description**

Related Applications

This application claims the benefit of U.S. provisional patent application serial number 63/728,733, filed on December 6, 2024, and U.S. provisional patent application serial number 63/754,695, filed on February 6, 2025, the disclosures of which are hereby incorporated herein by reference in their entireties.

Field

The technology of the disclosure relates generally to regulating output voltage in an adaptive constant on-time (ACOT) boost converter, especially when input voltage to the ACOT boost converter overlaps with the output voltage.

Background

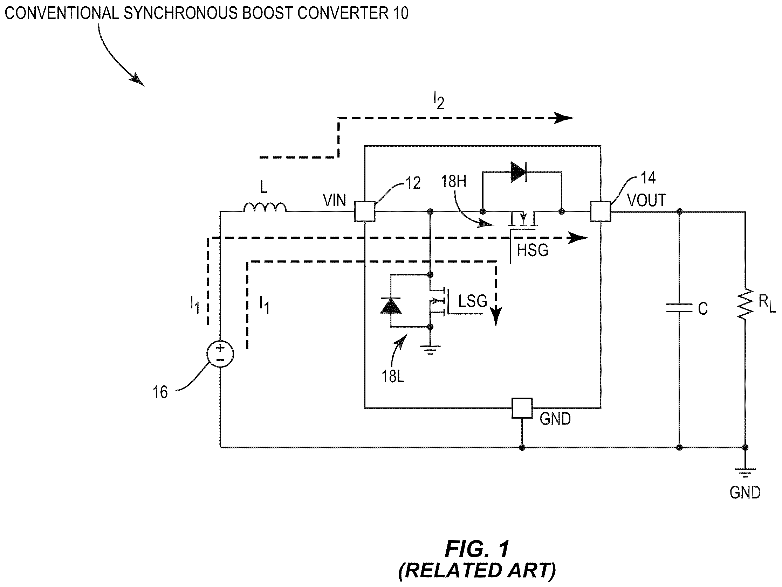

Boost converters are critical components in battery charging systems, particularly in applications requiring a step-up voltage conversion. In this regard, Figure 1 is a schematic diagram of an example conventional synchronous boost converter 10 configured to boost an input voltage VIN to a higher output voltage VOUT. Herein, the conventional synchronous boost converter 10 receives the input voltage VIN at a voltage input 12 and outputs the output voltage VOUT at a voltage output 14. In an embodiment, the input voltage VIN is provided by a voltage source 16 (e.g., solar panel, fuel cell, wall outlet, etc.) that is coupled between the voltage input 12 and a ground (GND). The conventional synchronous boost converter 10 also includes a holding capacitor C and a load $R_L$ that are coupled in parallel between the voltage output 14 and the GND.

At the heart of the conventional synchronous boost converter 10 are an inductor L, a low-side switch 18L, and a high-side switch 18H. In an embodiment, the inductor L is coupled between the voltage source 16 and the voltage input 12, the low-side switch 18L is coupled between the voltage input 12 and the GND, and the high-side switch 18H is coupled between the voltage input 12 and the voltage output 14. In an embodiment, the low-side switch 18L and the high-side switch 18H are semiconductor transistors that are closed in the presence of a low-side gate voltage LSG and a high-side gate voltage HSG, respectively. In contrast, the low-side switch 18L and the high-side switch 18H are opened in the absence of the low-side gate voltage LSG and the high-side gate voltage HSG, respectively.

The key principle that drives the conventional synchronous boost converter 10 is the tendency of the inductor L to resist changes in current by either increasing or decreasing the energy stored in the magnetic field of the inductor L. Specifically, when the low-side switch 18L is closed and the high-side switch 18H is synchronously opened during an on-time duration, the voltage source 16 causes a first current $I_1$ to flow through the inductor L and the low-side switch 18L, thus generating a magnetic field to store energy in the inductor L. When the low-side switch 18L is opened and the high-side switch 18H is synchronously closed during an off-time duration, the magnetic field created during the on-time duration will be reduced to cause a second current $I_2$ that flows from the inductor L to the voltage output 14 through the high-side switch 18H. In the meantime, the first current $I_1$ will also flow from the voltage source 16 to the voltage output 14 through the inductor L and the high-side switch 18H. A load current $I_L$ will now include both the first current $I_1$ and the second current $I_2$. As such, the holding capacitor C can be charged to make the output voltage VOUT higher than the input voltage VIN. Understandably, the on-time duration and the off-time duration alternate to thereby define a duty cycle D of the conventional synchronous boost converter 10, as shown in equation (Eq. 1).

$$D = (VOUT - VIN) / VOUT \qquad (Eq. 1)$$

The ability to boost the input voltage VIN to the higher output voltage VOUT makes the conventional synchronous boost converter 10 an ideal choice for such usage scenarios as renewable energy systems and universal serial bus (USB) chargers, where solar panels, fuel cells, or wall outlets are equivalent to the voltage source 16 and can produce the input voltage VIN. On the other hand, the load $R_L$ (e.g., a battery, low-dropout regulator, etc.) can have specific requirements with respect to an acceptable range of the output voltage VOUT. In this regard, it is essential for the conventional synchronous boost converter 10 to effectively regulate the output voltage VOUT in accordance with the requirements of the load $R_L$, thus enabling an efficient energy transfer.

Summary

Particular aspects are set out in the appended independent claims. Various optional embodiments are set out in the dependent claims.

Embodiments of the disclosure relate to a regulated adaptive constant on-time (ACOT) boost converter. Herein, the regulated ACOT boost converter includes a synchronous boost converter that can boost an input voltage to a higher output voltage in accordance with a duty cycle. The regulated ACOT boost converter also includes a well-known ACOT controller that determines the duty cycle with repeating cycles each consisting of a fixed on-time duration and flexible off-time duration. Understandably, for the synchronous boost converter to operate efficiently, the input voltage needs to be lower than the output voltage. However, such a requirement may not always be satisfied in some applications, thus causing out-of-regulation of the output voltage and/or damage in the synchronous boost converter. In an embodiment, the regulated ACOT boost converter can further include a regulating circuit that can cause a dynamic adjustment to the duty cycle when the input voltage is approaching the output voltage. As a result, it is possible to keep the output voltage in regulation and prevent damage in the synchronous boost converter.

In one aspect, a regulated ACOT boost converter is provided. The regulated ACOT boost converter includes a synchronous boost converter. The synchronous boost converter includes a low-side switch and a high-side switch. The low-side switch and the high-side switch are toggled synchronously in accordance with a duty cycle to boost an input voltage to an output voltage. The regulated ACOT boost converter also includes an ACOT controller. The ACOT controller is configured to determine the duty cycle based on a reference voltage and a feedback of the output voltage to thereby regulate the output voltage. The regulated ACOT boost converter also includes a regulating circuit. The regulating circuit is configured to increase the reference voltage when the input voltage is approaching the output voltage to cause the ACOT controller to dynamically adjust the duty cycle to thereby keep the output voltage in regulation.

In another aspect, a method for regulating an output voltage in a regulated ACOT boost converter is provided. The method includes toggling a low-side switch and a high-side switch in a synchronous boost converter synchronously in accordance with a duty cycle to boost an input voltage to an output voltage. The method also includes determining the duty cycle based on a reference voltage and a feedback of the output voltage to thereby regulate the output voltage. The method also includes increasing the reference voltage when the input voltage is approaching the output voltage to cause the duty cycle to be dynamically adjusted to thereby keep the output voltage in regulation.

In another aspect, an electronic device is provided. The electronic device includes a regulated ACOT boost converter. The regulated ACOT boost converter includes a synchronous boost converter. The synchronous boost converter includes a low-side switch and a high-side switch. The low-side switch and the high-side switch are toggled synchronously in accordance with a duty cycle to boost an input voltage to an output voltage. The regulated ACOT boost converter also includes an ACOT controller. The ACOT controller is configured to determine the duty cycle based on a reference voltage and feedback of the output voltage to thereby regulate the output voltage. The regulated ACOT boost converter also includes a regulating circuit. The regulating circuit is configured to increase the reference voltage when the input voltage is approaching the output voltage to cause the ACOT controller to dynamically adjust the duty cycle to thereby keep the output voltage in regulation.

Those skilled in the art will appreciate the scope of the present disclosure and realize additional aspects thereof after reading the following detailed description of the illustrative embodiments in association with the accompanying drawing figures.

Brief Description of the Drawing Figures

The accompanying drawing figures incorporated in and forming a part of this specification illustrate several aspects of the disclosure, and together with the description serve to explain the principles of the disclosure.

Figure 1 is a schematic diagram of an example conventional synchronous boost converter configured to boost an input voltage to a higher output voltage;

Figure 2A is a schematic diagram of a conventional adaptive constant on-time (ACOT) boost converter wherein an ACOT controller is configured to control the conventional synchronous boost converter of Figure 1;

Figure 2B is a graphic diagram providing an example visual illustration of undesirable behavior exhibited by the conventional ACOT boost converter of Figure 2A when the input voltage becomes higher than the output voltage;

Figure 3 is a schematic diagram of an example regulated ACOT boost converter configured according to an embodiment of the present disclosure to keep an output voltage in regulation when an input voltage is approaching the output voltage;

Figure 4 is a graphic diagram providing an example visual illustration of the output voltage as regulated by the regulated ACOT boost converter of Figure 3 independent of the input voltage;

Figure 5 is a schematic diagram of an example regulating circuit configured to keep the output voltage in regulation when the input voltage is approaching the output voltage in the regulated ACOT boost converter of Figure 3;

Figure 6 is a schematic diagram of an example communication device wherein the regulated ACOT boost converter of Figure 3 can be provided; and

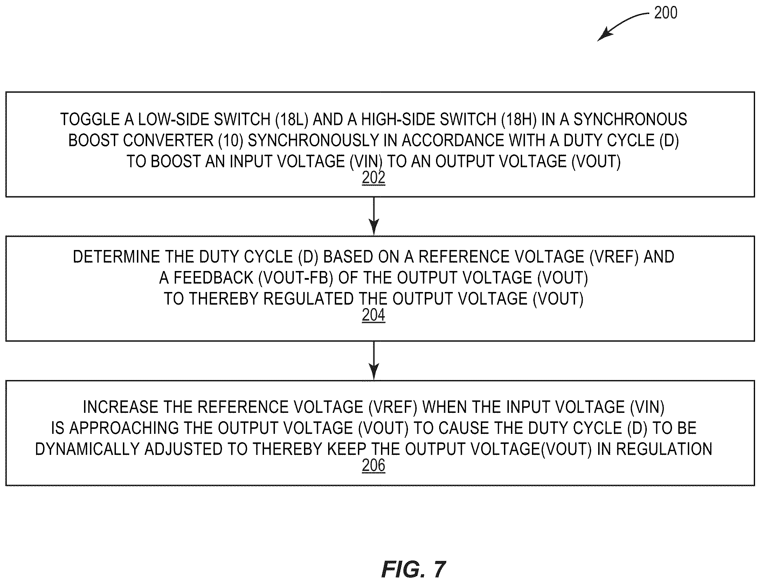

Figure 7 is a flowchart of an example process for regulating the output voltage in the regulated ACOT boost converter of Figure 3.

Detailed Description

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element such as a layer, region, or substrate is referred to as being "on" or extending "onto" another element, it can be directly on or extend directly onto the other element or intervening elements may also be present. In contrast, when an element is referred to as being "directly on" or extending "directly onto" another element, there are no intervening elements present. Likewise, it will be understood that when an element such as a layer, region, or substrate is referred to as being "over" or extending "over" another element, it can be directly over or extend directly over the other element or intervening elements may also be present. In contrast, when an element is referred to as being "directly over" or extending "directly over" another element, there are no intervening elements present. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

Relative terms such as "below" or "above" or "upper" or "lower" or "horizontal" or "vertical" may be used herein to describe a relationship of one element, layer, or region to another element, layer, or region as illustrated in the Figures. It will be understood that these terms and those discussed above are intended to encompass different orientations of the device in addition to the orientation depicted in the Figures.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Embodiments of the disclosure relate to a regulated adaptive constant on-time (ACOT) boost converter. Herein, the regulated ACOT boost converter includes a synchronous boost converter that can boost an input voltage to a higher output voltage in accordance with a duty cycle. The regulated ACOT boost converter also includes a well-known ACOT controller that determines the duty cycle with repeating cycles each consisting of a fixed on-time duration and flexible off-time duration. Understandably, for the synchronous boost converter to operate efficiently, the input voltage needs to be lower than the output voltage. However, such a requirement may not always be satisfied in some applications, thus causing out-of-regulation of the output voltage and/or damage in the synchronous boost converter. In an embodiment, the regulated ACOT boost converter can further include a regulating circuit that can cause a dynamic adjustment to the duty cycle when the input voltage is approaching the output voltage. As a result, it is possible to keep the output voltage in regulation and prevent damage in the synchronous boost converter.

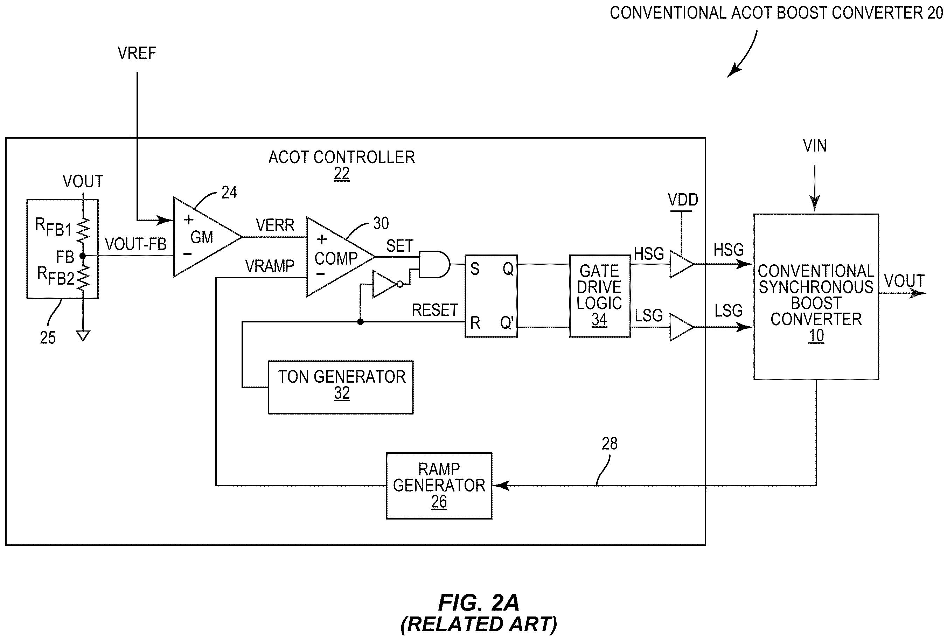

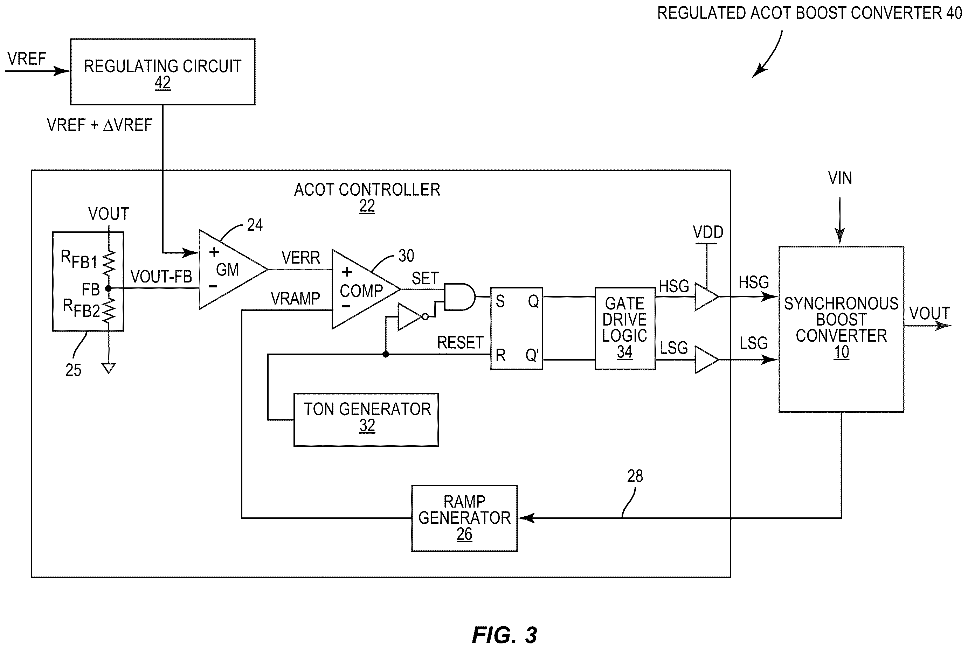

Before discussing the regulated ACOT boost converter of the present disclosure, starting at Figure 3, a brief discussion of a conventional ACOT boost converter is first provided with reference to Figures 2A-2B to help understand the technical problem to be solved herein. Common elements between Figures 1 and 2A-2B are shown therein with common element numbers and will not be re-described herein.

Figure 2A is a schematic diagram of a conventional ACOT boost converter 20 wherein an ACOT controller 22 is configured to control the conventional synchronous boost converter 10 of Figure 1. ACOT is a well-known control technique to regulate the output voltage VOUT in the conventional synchronous boost converter 10 of Figure 1 by maintaining a fixed on-time duration for the low-side switch 18L and a flexible off-time duration for the high-side switch 18H.

Specifically, the flexible off-time duration can be dynamically adjusted based on conditions of the input voltage VIN and the output voltage VOUT to change the duty cycle D and, thereby, regulate the output voltage VOUT. In context of the present disclosure, the phrases "regulating the output voltage VOUT" and "output voltage regulation" refer generally to controlling the duty cycle D of the conventional synchronous boost converter 10 to thereby maintain the output voltage VOUT at a desired level or range.

The ACOT controller 22 includes an error amplifier 24 with a controllable transconductance GM. The error amplifier 24 is configured to amplify a difference between a reference voltage VREF and a feedback VOUT-FB of the output voltage VOUT to thereby generate an error voltage VERR. Herein, the feedback VOUT-FB may be received via a feedback node FB located in between a pair of resistors Rfb1 and Rfb2. Understandably, the resistors Rfb1 and Rfb2 collectively form a voltage divider 25 such that the feedback VOUT-FB can be proportionally related to the output voltage VOUT.

The ACOT controller 22 also includes a RAMP generator 26 as part of a control loop 28. The RAMP generator 26 is configured to generate a voltage ramp VRAMP. Herein, VRAMP refers to a small, linearly increasing voltage signal used within the control loop 28 to determine when to turn off the low-side switch 18L and, thereby, ensure the fixed on-time duration regardless of changes in the load $R_L$ and/or the input voltage VIN. In this regard, the voltage ramp VRAMP acts, in essence, as a timing reference for the duty cycle D based on the output voltage VOUT rather than a fixed frequency. The RAMP generator 26 is thus crucial for achieving a stable constant on-time operation, as the voltage ramp VRAMP allows the ACOT controller 22 to dynamically adjust the duty cycle D based on the output voltage VOUT.

The ACOT controller 22 also includes a comparator 30 that compares the error voltage VERR with the voltage ramp VRAMP. When the error voltage VERR is equal to a minimum level (a.k.a. valley) of the voltage ramp VRAMP, the comparator 30 will trigger a SET signal that will anchor a start of the fixed on-time duration. Accordingly, a TON generator 32 will start the fixed on-time duration and a gate drive logic 34 will generate the low-side gate voltage LSG to turn on the low-side switch 18L. At an end of the fixed on-time duration, the TON generator 32 will generate a RESET signal to conclude the fixed on-time duration and start the flexible off-time duration. Accordingly, the gate drive logic 34 will generate the high-side gate voltage HSG to turn on the high-side switch 18H. Contrary to the fixed on-time duration, the flexible off-time duration will be regulated depending on the load $R_L$.

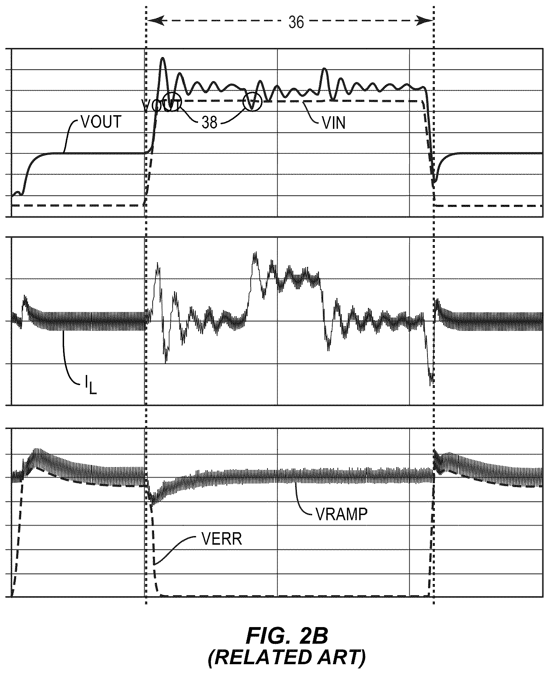

The conventional ACOT boost converter 20 works well when the input voltage VIN is lower than the output voltage VOUT. Unfortunately, this may not always be the case. In a non-limiting example, the conventional ACOT boost converter 20 can be used to charge a wearable smart watch. In this application the input voltage VIN ranges from 4.2 to 5.5 V, whereas the output voltage VOUT is required to be between 5 to 6 V. In this regard, if the input voltage VIN is 5.5 V and the output voltage VOUT is required to be in the range of 5 to 5.4 V, the input voltage VIN can become higher than the output voltage VOUT. As a result, the conventional ACOT boost converter 20 can exhibit undesirable behavior as further illustrated in Figure 2B.

Figure 2B is a graphic diagram providing an example visual illustration of undesirable behavior exhibited by the conventional ACOT boost converter 20 of Figure 2A in a dropout region 36 when the input voltage VIN becomes higher than the output voltage VOUT. As shown herein, the input voltage VIN becomes higher than the output voltage VOUT at several spots 38 in the dropout region 36. In this regard, the control loop 28 may be railed out to become an open loop. The error voltage VERR and the voltage ramp VRAMP, on the other hand, may become uncorrelated to affect the ability of the comparator 30 to correctly generate the SET signal. In addition, a load step in the dropout region 36 can cause uncontrolled ringing in the load current $I_L$ depending on the inductor L and the holding capacitor C. Consequently, the conventional ACOT boost converter 20 will not be able to effectively regulate the output voltage VOUT, which may lead to damage of the high-side switch 18H in the conventional synchronous boost converter 10. Hence, it is desirable to optimize the conventional ACOT boost converter 20 to effectively regulate the output voltage VOUT in face of a higher input voltage VIN.

In this regard, Figure 3 is a schematic diagram of an example regulated ACOT boost converter 40 configured according to an embodiment of the present disclosure to keep an output voltage VOUT in regulation when an input voltage VIN is approaching the output voltage VOUT. To minimize hardware changes and maximize backward compatibility, the regulated ACOT boost converter 40 is configured to reuse the conventional synchronous boost converter 10 of Figure 1 and the ACOT controller 22 in Figure 2A.

In an embodiment, a regulating circuit 42 is added to the conventional ACOT boost converter 20 to thereby form the regulated ACOT boost converter 40. Herein, the regulating circuit 42 is coupled to the error amplifier 24 in the ACOT controller 22. The regulating circuit 42 can dynamically increase the reference voltage VREF by an adjustment term $\Delta$VREF to thereby increase the reference voltage VREF when the input voltage VIN exceeds a defined threshold from the output voltage VOUT. In one embodiment, the defined threshold can be equal to a fractional threshold value $D_{TH}$ ($D_{TH} < 1$) multiplied by the output voltage VOUT ($D_{TH}$*VOUT). The regulating circuit 42 will then provide the increased reference voltage VREF+$\Delta$VREF to the error amplifier 24 in the ACOT controller 22.

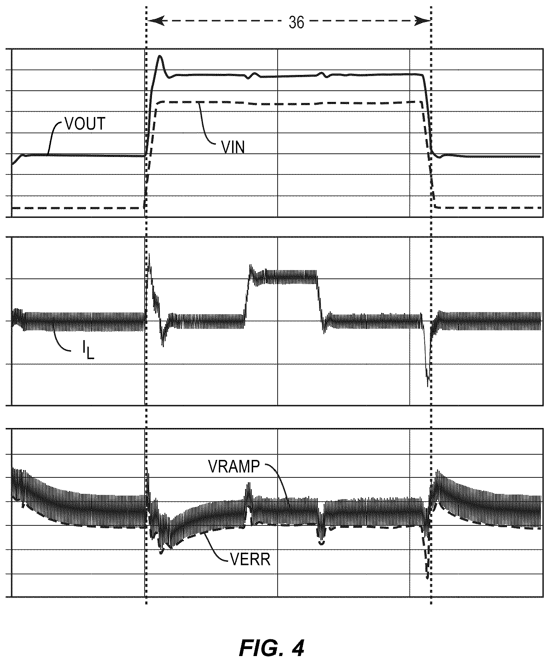

The error amplifier 24, in turn, will amplify a difference between the increased reference voltage VREF+$\Delta$VREF and the feedback of the output voltage VOUT to thereby generate the error voltage VERR. Accordingly, the ACOT controller 22 can determine the fixed on-time duration and the flexible off-time duration in the duty cycle D and synchronously toggle the low-side switch 18L and the high-side switch 18H. As illustrated in Figure 4, it is possible to keep the output voltage VOUT in regulation by proactively causing the ACOT controller 22 to adjust the duty cycle D as soon as the input voltage VIN crosses the defined threshold.

Figure 4 is a graphic diagram providing an example visual illustration of the output voltage VOUT as regulated by the regulated ACOT boost converter 40 of Figure 3 independent of the input voltage VIN. Common elements between Figures 2B and 4 are shown therein with common element numbers and will not be re-described herein.

As illustrated herein, the output voltage VOUT consistently stays above the input voltage VIN in the dropout region 36. As such, the load step will not cause uncontrolled ringing in the load current $I_L$. By increasing the reference voltage VREF to include the adjustment term ΔVREF, the error amplifier 24 will then be able to generate the error voltage VERR in correlation with the voltage ramp VRAMP. As a result, the comparator 30 can correctly generate the SET signal such that the ACOT controller 22 can set the duty cycle D appropriately (e.g., D = 0.95) to keep the output voltage VOUT in regulation in the dropout region 36.

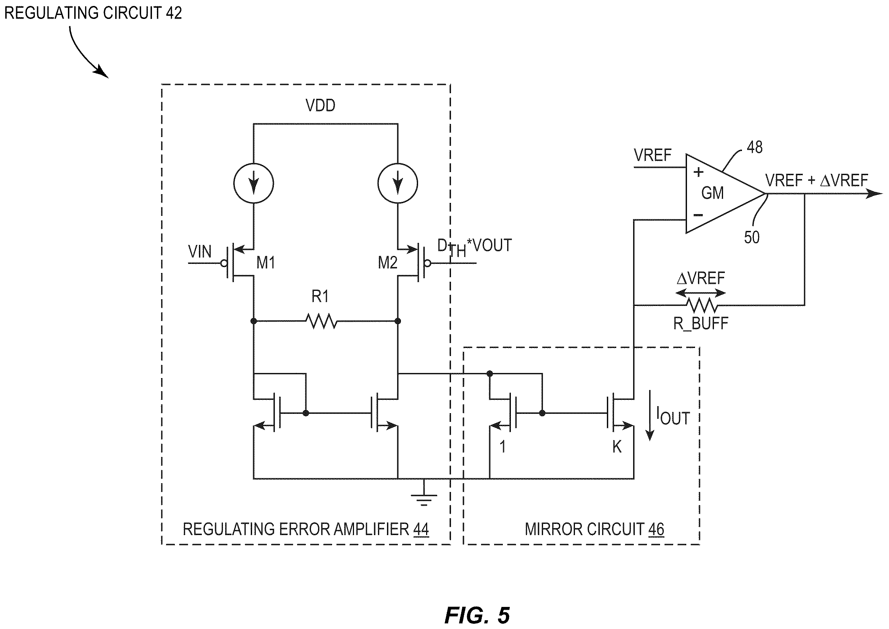

Figure 5 is a schematic diagram providing an example illustration of the regulating circuit 42 in the regulated ACOT boost converter 40 of Figure 3. Common elements between Figures 3 and 5 are shown therein with common element numbers and will not be re-described herein.

Herein, the regulating circuit 42 is configured to mirror the output voltage VOUT and the input voltage VIN to thereby determine the adjustment term ΔVREF and apply the adjustment term ΔVREF to the reference voltage VREF to thereby generate the increased reference voltage VREF+ΔVREF. In an embodiment, the regulating circuit 42 includes a regulating error amplifier 44, a mirror circuit 46, and an integrator 48. The regulating error amplifier 44 includes a pair of transistors M1, M2 and a resistor R1 coupled between the pair of transistors M1, M2. The transistor M1 is biased by the input voltage VIN and the transistor M2 is biased by the defined threshold that is equal to $D_{TH}$*VOUT. The regulating error amplifier 44 has a configurable transconductance Gmb as defined by equation (Eq. 2) below.

$$Gmb = 1 / (R1 + 1 / gm12) * K \qquad (Eq. 2)$$

In the equation (Eq. 2), R1 represents the resistance of the resistor R1 coupled between the transistors M1, M2, K represents a mirroring ratio of the mirror circuit 46, and gm12 represents a transconductance of the transistors M1, M2. The integrator 48 has a positive input (denoted as "+") that receives the reference voltage VREF, a negative input (denoted as "-") coupled to the mirror circuit 46, and an output 50 configured to provide the increased reference voltage VREF+ΔVREF to the error amplifier 24 in the ACOT controller 22. A reference resistor R_BUFF is coupled between the negative input and the output 50 of the integrator 48.

When the input voltage VIN exceeds the defined threshold $D_{TH}$*VOUT (VIN > $D_{TH}$*VOUT), the regulating error amplifier 44 will cause a mirrored output current $I_{OUT}$ via the mirror circuit 46. The mirror output current $I_{OUT}$ flows through the reference resistor R_BUFF to thereby generate the adjustment term ΔVREF, as expressed in equation (Eq. 3) below.

$$ΔVREF = (VIN - D_{TH}*VOUT) * Gmb * R\_BUFF \quad (Eq. 3)$$

In the equation (Eq. 3), Gmb represents the transconductance of the regulating error amplifier 44 as determined by the equation (Eq. 2) and R_BUFF represents the resistance of the reference resistor R_BUFF. In this regard, as soon as the input voltage VIN crosses the defined threshold $D_{TH}$*VOUT, the regulating circuit 42 will react to drive up the reference voltage VREF by the adjustment term ΔVREF to thereby ensure the control loop 28 remains regulated. As a result, if there is any load step in the dropout region 36, the performance of the regulated ACOT boost converter 40 is still well controlled to keep the output voltage in regulation.

When the input voltage VIN is below the defined threshold $D_{TH}$*VOUT, the mirrored output current $I_{OUT}$ will be zero. Therefore, the adjustment term ΔVREF will be zero as well. In this regard, the integrator 48 will simply output the reference voltage VREF.

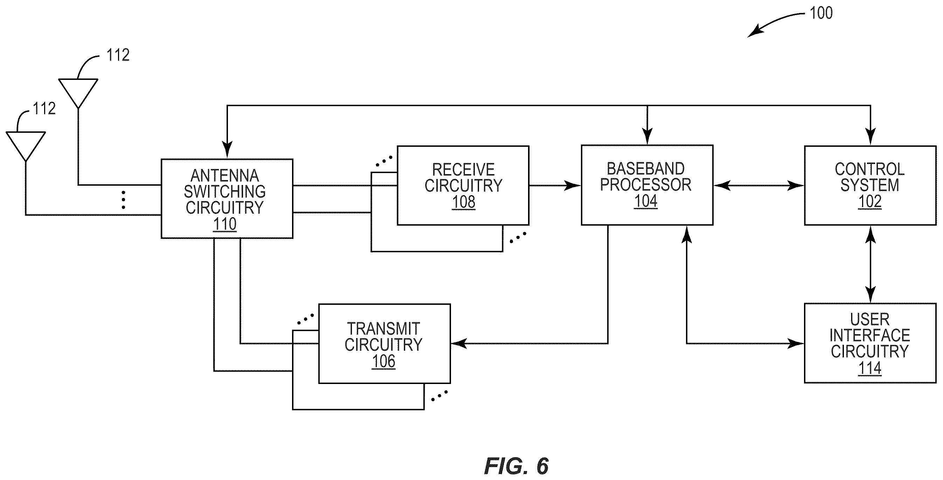

The regulated ACOT boost converter 40 of Figure 3 can be provided in various electronic devices, including but not limited to a communication device (e.g., wireless device, wearable device, etc.), to support the embodiments described above. In this regard, Figure 6 is a schematic diagram of an example communication device 100 wherein the regulated ACOT boost converter 40 of Figure 3 can be provided.

Herein, the communication device 100 can be any type of communication devices, such as mobile terminals, smart watches, tablets, computers, navigation devices, access points, base stations (e.g., eNB, gNB, etc.), and any other type of wireless communication devices that support wireless communications, such as cellular, wireless local area network (WLAN), Bluetooth, Ultra-wideband (UWB), and near field communications. The communication device 100 will generally include a control system 102, a baseband processor 104, transmit circuitry 106, receive circuitry 108, antenna switching circuitry 110, multiple antennas 112, and user interface circuitry 114. In a non-limiting example, the control system 102 can be a field-programmable gate array (FPGA), as an example. In this regard, the control system 102 can include at least a microprocessor(s), an embedded memory circuit(s), and a communication bus interface(s). The receive circuitry 108 receives radio frequency signals via the antennas 112 and through the antenna switching circuitry 110 from one or more base stations. A low noise amplifier and a filter cooperate to amplify and remove broadband interference from the received signal for processing. Downconversion and digitization circuitry (not shown) will then downconvert the filtered, received signal to an intermediate or baseband frequency signal, which is then digitized into one or more digital streams using an analog-to-digital converter(s) (ADC).

The baseband processor 104 processes the digitized received signal to extract the information or data bits conveyed in the received signal. This processing typically comprises demodulation, decoding, and error correction operations, as will be discussed in greater detail below. The baseband processor 104 is generally implemented in one or more digital signal processors (DSPs) and application specific integrated circuits (ASICs).

For transmission, the baseband processor 104 receives digitized data, which may represent voice, data, or control information, from the control system 102, which it encodes for transmission. The encoded data is output to the transmit circuitry 106, where a digital-to-analog converter(s) (DAC) converts the digitally encoded data into an analog signal and a modulator modulates the analog signal onto a carrier signal that is at a desired transmit frequency or frequencies. A power amplifier will amplify the modulated carrier signal to a level appropriate for transmission, and deliver the modulated carrier signal to the antennas 112 through the antenna switching circuitry 110. The multiple antennas 112 and the replicated transmit and receive circuitries 106, 108 may provide spatial diversity. Modulation and processing details will be understood by those skilled in the art.

In an embodiment, it is possible to regulate the output voltage VOUT in the regulated ACOT boost converter 40 of Figure 3 based on a process. In this regard, Figure 5 is a flowchart of an example process 200 for regulating the output voltage VOUT in the regulated ACOT boost converter 40 of Figure 3.

Herein, the process 200 includes toggling the low-side switch 18L and the high-side switch 18H in the conventional synchronous boost converter 10 synchronously in accordance with the duty cycle D to boost the input voltage VIN to the output voltage VOUT (step 202). The process 200 also includes determining the duty cycle D based on the reference voltage VREF and the feedback VOUT-FB of the output voltage VOUT to thereby regulate the output voltage VOUT (step 204). The process 200 also includes increasing the reference voltage VREF when the input voltage VIN is approaching the output voltage VOUT to cause the duty cycle D to be dynamically adjusted to thereby keep the output voltage VOUT in regulation (step 206).

Therefore, from one perspective, there have been described approaches for a regulated adaptive constant on-time (ACOT) boost converter. Herein, the regulated ACOT boost converter includes a synchronous boost converter that can boost an input voltage to a higher output voltage in accordance with a duty cycle. The regulated ACOT boost converter also includes a well-known ACOT controller that determines the duty cycle with repeating cycles each consisting of a fixed on-time duration and a flexible off-time duration. Understandably, for the synchronous boost converter to operate efficiently, the input voltage needs to be lower than the output voltage. In this regard, in an embodiment, the regulated ACOT boost converter can further include a regulating circuit that can cause a dynamic adjustment to the duty cycle when the input voltage is approaching the output voltage. As a result, it is possible to keep the output voltage in regulation and prevent damage in the synchronous boost converter.

Further examples of feature combinations taught by the present disclosure are set out in the following numbered clauses.

Clause 1. A regulated adaptive constant on-time (ACOT) boost converter comprising: a synchronous boost converter comprising a low-side switch and a high-side switch that are toggled synchronously in accordance with a duty cycle to boost an input voltage to an output voltage; an ACOT controller configured to determine the duty cycle based on a reference voltage and feedback of the output voltage to thereby regulate the output voltage; and a regulating circuit configured to increase the reference voltage when the input voltage is approaching the output voltage to cause the ACOT controller to dynamically adjust the duty cycle to thereby keep the output voltage in regulation.

Clause 2. The regulated ACOT boost converter of clause 1, wherein the ACOT controller is further configured to: determine the duty cycle comprising a plurality of repeating cycles each having a fixed on-time duration followed by a flexible off-time duration; turn on the low-side switch and turn off the high-side switch synchronously during the fixed on-time duration in each of the plurality of repeating cycles; and turn off the low-side switch and turn on the high-side switch synchronously during the flexible off-time duration in each of the plurality of repeating cycles.

Clause 3. The regulated ACOT boost converter of clause 1 or 2, wherein the regulating circuit is further configured to increase the reference voltage when the input voltage is higher than or equal to the output voltage multiplied by a fractional threshold value.

Clause 4. The regulated ACOT boost converter of clause 1, 2 or 3, wherein the regulating circuit is further configured to determine and add a positive adjustment term to the reference voltage to thereby increase the reference voltage when the input voltage is approaching the output voltage.

Clause 5. The regulated ACOT boost converter of clause 4, wherein the regulating circuit is further configured to: determine a transconductance that relates a relative change between the input voltage and the output voltage with a change in an output current; and determine the positive adjustment term as a function of the change in the output current.

Clause 6. A method for regulating an output voltage in an adaptive constant on-time (ACOT) boost converter comprising: toggling a low-side switch and a high-side switch in a synchronous boost converter synchronously in accordance with a duty cycle to boost an input voltage to an output voltage; determining the duty cycle based on a reference voltage and feedback of the output voltage to thereby regulate the output voltage; and increasing the reference voltage when the input voltage is approaching the output voltage to cause the duty cycle to be dynamically adjusted to thereby keep the output voltage in regulation.

Clause 7. The method of clause 6, further comprising: determining the duty cycle comprising a plurality of repeating cycles each having a fixed on-time duration followed by a flexible off-time duration; turning on the low-side switch and turning off the high-side switch synchronously during the fixed on-time duration in each of the plurality of repeating cycles; and turning off the low-side switch and turning on the high-side switch synchronously during the flexible off-time duration in each of the plurality of repeating cycles.

Clause 8. The method of clause 6 or 7, further comprising increasing the reference voltage when the= input voltage is higher than or equal to the output voltage multiplied by a fractional threshold value.

Clause 9. The method of clause 6, 7 or 8, further comprising determining and adding a positive adjustment term to the reference voltage to thereby increase the reference voltage when the input voltage is approaching the output voltage.

Clause 10. The method of clause 9, further comprising: determining a transconductance that relates a relative change between the input voltage and the output voltage with a change in an output current; and determining the positive adjustment term as a function of the change in the output current.

Clause 11. An electronic device comprising a regulated adaptive constant on-time (ACOT) boost converter, the regulated ACOT boost converter comprises: a synchronous boost converter comprising a low-side switch and a high-side switch that are toggled synchronously in accordance with a duty cycle to boost an input voltage to an output voltage; an ACOT controller configured to determine the duty cycle based on a reference voltage and feedback of the output voltage to thereby regulate the output voltage; and a regulating circuit configured to increase the reference voltage when the input voltage is approaching the output voltage to cause the ACOT controller to dynamically adjust the duty cycle to thereby keep the output voltage in regulation.

Clause 12. The electronic device of clause 11, wherein the ACOT controller is further configured to: determine the duty cycle comprising a plurality of repeating cycles each having a fixed on-time duration followed by a flexible off-time duration; turn on the low-side switch and turn off the high-side switch synchronously during the fixed on-time duration in each of the plurality of repeating cycles; and turn off the low-side switch and turn on the high-side switch synchronously during the flexible off-time duration in each of the plurality of repeating cycles.

Clause 13. The electronic device of clause 11 or 12, wherein the regulating circuit is further configured to increase the reference voltage when the input voltage is higher than or equal to the output voltage multiplied by a fractional threshold value.

Clause 14. The electronic device of clause 11, 12 or 13, wherein the regulating circuit is further configured to determine and add a positive adjustment term to the reference voltage to thereby increase the reference voltage when the input voltage is approaching the output voltage.

Clause 15. The electronic device of clause 14, wherein the regulating circuit is further configured to: determine a transconductance that relates a relative change between the input voltage and the output voltage with a change in an output current; and determine the positive adjustment term as a function of the change in the output current.

Those skilled in the art will recognize improvements and modifications to the illustrative embodiments of the present disclosure. All such improvements and modifications are considered within the scope of the concepts disclosed herein and the claims that follow.

## Claims

1. A regulated adaptive constant on-time (ACOT) boost converter comprising:

   a synchronous boost converter comprising a low-side switch and a high-side switch that are toggled synchronously in accordance with a duty cycle to boost an input voltage to an output voltage;
   an ACOT controller configured to determine the duty cycle based on a reference voltage and feedback of the output voltage to thereby regulate the output voltage; and
   a regulating circuit configured to increase the reference voltage when the input voltage is approaching the output voltage to cause the ACOT controller to dynamically adjust the duty cycle to thereby keep the output voltage in regulation.

2. The regulated ACOT boost converter of claim 1, wherein the ACOT controller is further configured to:

determine the duty cycle comprising a plurality of repeating cycles each having a fixed on-time duration followed by a flexible off-time duration;

turn on the low-side switch and turn off the high-side switch synchronously during the fixed on-time duration in each of the plurality of repeating cycles; and

turn off the low-side switch and turn on the high-side switch synchronously during the flexible off-time duration in each of the plurality of repeating cycles.

3. The regulated ACOT boost converter of claim 1 or 2, wherein the regulating circuit is further configured to increase the reference voltage when the input voltage is higher than or equal to the output voltage multiplied by a fractional threshold value.

4. The regulated ACOT boost converter of claim 1, 2 or 3, wherein the regulating circuit is further configured to determine and add a positive adjustment term to the reference voltage to thereby increase the reference voltage when the input voltage is approaching the output voltage.

5. The regulated ACOT boost converter of claim 4, wherein the regulating circuit is further configured to:

determine a transconductance that relates a relative change between the input voltage and the output voltage with a change in an output current; and

determine the positive adjustment term as a function of the change in the output current.

6. An electronic device comprising the regulated adaptive constant on-time (ACOT) boost converter of any preceding claim.

7. A method for regulating an output voltage in an adaptive constant on-time (ACOT) boost converter comprising:

toggling a low-side switch and a high-side switch in a synchronous boost converter synchronously in accordance with a duty cycle to boost an input voltage to an output voltage;

determining the duty cycle based on a reference voltage and feedback of the output voltage to thereby regulate the output voltage; and

increasing the reference voltage when the input voltage is approaching the output voltage to cause the duty cycle to be dynamically adjusted to thereby keep the output voltage in regulation.

8. The method of claim 7, further comprising:

determining the duty cycle comprising a plurality of repeating cycles each having a fixed on-time duration followed by a flexible off-time duration;

turning on the low-side switch and turning off the high-side switch synchronously during the fixed on-time duration in each of the plurality of repeating cycles; and

turning off the low-side switch and turning on the high-side switch synchronously during the flexible off-time duration in each of the plurality of repeating cycles.

9. The method of claim 7 or 8, further comprising increasing the reference voltage when the input voltage is higher than or equal to the output voltage multiplied by a fractional threshold value.

10. The method of claim 7, 8 or 9, further comprising determining and adding a positive adjustment term to the reference voltage to thereby increase the reference voltage when the input voltage is approaching the output voltage.

11. The method of claim 10, further comprising:

determining a transconductance that relates a relative change between the input voltage and the output voltage with a change in an output current; and

determining the positive adjustment term as a function of the change in the output current.

CONVENTIONAL SYNCHRONOUS BOOST CONVERTER 10

*FIG. 1*
*(RELATED ART)*

*FIG. 2A*
*(RELATED ART)*

**FIG. 2B**
**(RELATED ART)**

REGULATED ACOT BOOST CONVERTER 40

*FIG. 3*

FIG. 4

**FIG. 5**

EP 4 757 151 A1

**FIG. 6**

EP 4 757 151 A1

200

TOGGLE A LOW-SIDE SWITCH (18L) AND A HIGH-SIDE SWITCH (18H) IN A SYNCHRONOUS
BOOST CONVERTER (10) SYNCHRONOUSLY IN ACCORDANCE WITH A DUTY CYCLE (D)
TO BOOST AN INPUT VOLTAGE (VIN) TO AN OUTPUT VOLTAGE (VOUT)
202

DETERMINE THE DUTY CYCLE (D) BASED ON A REFERENCE VOLTAGE (VREF) AND
A FEEDBACK (VOUT-FB) OF THE OUTPUT VOLTAGE (VOUT)
TO THEREBY REGULATED THE OUTPUT VOLTAGE (VOUT)
204

INCREASE THE REFERENCE VOLTAGE (VREF) WHEN THE INPUT VOLTAGE (VIN)
IS APPROACHING THE OUTPUT VOLTAGE (VOUT) TO CAUSE THE DUTY CYCLE (D) TO BE
DYNAMICALLY ADJUSTED TO THEREBY KEEP THE OUTPUT VOLTAGE(VOUT) IN REGULATION
206

*FIG. 7*

# EUROPEAN SEARCH REPORT

**Application Number**

EP 25 22 0215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GEMELLI ALESSANDRO ET AL: "Adaptive Constant On-Time Control Technique Application in Boost Converters", 2023 18TH CONFERENCE ON PH.D RESEARCH IN MICROELECTRONICS AND ELECTRONICS (PRIME) IEEE, 18 June 2023 (2023-06-18), pages 201-204, XP034367464, DOI: 10.1109/PRIME58259.2023.10161813 [retrieved on 2023-06-30] * figure 1 * * figure 2 * * First paragraph in 'I. Introduction'; page 201 * * 'A. Topology' and 'B. On-Time Generator Block'; page 202 * * Second paragraph in 'D. Modulator Gain'; page 203 * | 1-11 | INV. H02M1/00 H02M3/158 |
| Y | KUROKAWA FUJIO ET AL: "A Reference Modification Model Digitally Controlled DC-DC Converter for Improvement of Transient Response", IEEE TRANSACTIONS ON POWER ELECTRONICS INSTITUTE OF ELECTRICAL AND ELECTRONICS ENGINEERS, USA, vol. 31, no. 1, 1 January 2016 (2016-01-01), pages 871-883, XP011669880, ISSN: 0885-8993, DOI: 10.1109/TPEL.2015.2411679 [retrieved on 2015-09-21] * figure 5 * | 1-11 | TECHNICAL FIELDS SEARCHED (IPC) H02M |
| A | US 11 218 076 B2 (TEXAS INSTRUMENTS INC [US]) 4 January 2022 (2022-01-04) * figure 9 * | 5,11 | |

The present search report has been drawn up for all claims

| Place of search | Date of completion of the search | Examiner |
|---|---|---|
| The Hague | 16 March 2026 | Kafadar, Ahmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0215

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | Publication date | Patent family member(s) | Publication date |
|---|---|---|---|
| US 11218076 B2 | 04-01-2022 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63728733

- US 63754695